# EUROPÄISCHE PATENTSCHRIFT

(11) **EP 1 008 855 B1**
(45) Veröffentlichungstag und Bekanntmachung des Hinweises auf die Patenterteilung: **21.06.2006**
(21) Anmeldenummer: 99119800.3
(22) Anmeldetag: 06.10.1999
(51) Int. Cl.: G01P 1/04, G01P 3/44, G01P 1/00, G01P 3/487

(54) **Sensorring**
Sensor ring
Bague de capteur

(30) Priorität: 08.12.1998 DE 19856498
(43) Veröffentlichungstag der Anmeldung: 14.06.2000
(73) Patentinhaber: Carl Freudenberg KG, 69469 Weinheim (DE)
(72) Erfinder: Guth, Wolfgang, Dr., 68526 Ladenburg (DE)

(56) Entgegenhaltungen:
- EP-A- 0 725 242
- US-A- 4 835 505
- PATENT ABSTRACTS OF JAPAN vol. 012, no. 233 (P-724), 5. Juli 1988 (1988-07-05) & JP 63 026532 A (HONDA MOTOR CO LTD;OTHERS: 01), 4. Februar 1988 (1988-02-04)

## Beschreibung

### Technisches Gebiet

Die Erfindung betrifft ein Verfahren zu Herstellung eines Sensorringes, bei dem ein verformungssteifes Tragteil mit einem Sensorring aus polymeren Werkstoff unlösbar verbunden wird.

### Stand der Technik

Ein solches Verfahren ist bekannt. Das Tragteil und der Sensorring werden dabei völlig unabhängig voneinander hergestellt und nachfolgend miteinander verklebt. Hiermit ist nicht nur ein erheblicher Fertigungsaufwand sondern darüber hinaus die Gefahr verbunden, daß sich der Sensorring während der bestimmungsgemäßen Verwendung unter der Einwirkung sekundärer Stoffe, beispielsweise von erhitztem Schmieröl, wieder von dem Tragteil ablöst.

### Darstellung der Erfindung

Der Erfindung liegt die Aufgabe zugrunde, ein Verfahren zur Herstellung eines Sensorringes zu zeigen, das kostengünstig durchführbar ist und es gestattet, eine verbesserte Verbindung zwischen dem Sensorring und dem Tragteil zu erzeugen.

Diese Aufgabe wird erfindungsgemäß bei einem Verfahren der eingangs genannten Art mit den kennzeichnenden Merkmalen von Anspruch 1 gelöst. Auf vorteilhafte Ausgestaltungen nehmen die Unteransprüche Bezug.

Bei dem erfindungsgemäßen Verfahren ist es vorgesehen, daß das Tragteil aus thermoplastischem Werkstoff, wie z. B. Polyphenylensulfit (PPS), Polyamid (PA), Polypropylen (PP) oder Polyurethan (PUR) und der Sensorring aus elastomerem Werkstoff, in nur einem Werkzeug erzeugt werden, mit der Maßgabe, daß der zur Herstellung des Sensorrings verwendete Werkstoff zuvor mit einem Gehalt an gleichmäßig darin verteilten, magnetisierbaren Partikeln vermischt wurde und daß der Sensorring zur Erzeugung elektromagnetischer Signale nach seiner Formgebung und Verfestigung an in Umfangsrichtung einen Abstand von einander aufweisenden Stellen magnetisiert wird. Für den Sensorring können statt elastomerer Werkstoffe auch thermoplastische Werkstoffe verwendet werden. Die Erfindung geht von der Erkenntnis aus, daß durch die Vermeidung eines sekundären, polymeren Klebstoffs in der Trennfuge zwischen dem Sensorring und dem Tragteil die Gefahr deutlich vermindert ist, daß sich Paarungs- und Haftungsprobleme an den Grenzflächen zwischen den beiden Teilen und dem Klebstoff ergeben. Außerdem treffen die das Tragteil und den Sensorring bildenden Werkstoffe während deren Formgebung und Verfestigung in schmelzflüssigem beziehungsweise flüssigem Zustand aufeinander, daß heißt in einem Zustand, in dem noch reaktive Gruppen des jeweiligen polymeren Werkstoffes verfügbar sind. Die an sich verschiedenen Werkstoffe können dadurch eine chemische Reaktion miteinander eingehen, was die Haltbarkeit der gegenseitigen Ver bindung beider Teile aneinander wesentlich verbessert. Auch scheint sich durch den Gehalt an magnetisierbaren Partikeln zumindest in dem den Sensorring bildenden Werkstoffkörper eine deutliche Verbesserung der Haftungsneigung zu ergeben. Selbst bei Verwendung von Werkstoffen eines unterschiedlichen Wärmeausdehnungskoeffizienten wurde bei Temperatur wechseln bei den erfindungsgemäß hergestellten Teilen keine Auflösung der Verbindung zwischen dem Tragteil und dem Sensorring beobachtet.

Nach einer vorteilhaften Ausgestaltung ist es vorgesehen, daß die den Sensorteil und den Tragteil bildenden, polymeren Werkstoffe in schmelzflüssigem oder pastösem Zustand in demselben Werkzeug aufeinander gespritzt und gemeinsam verfestigt werden. Hierzu ist es erforderlich, die Fließkanäle des verwendeten Werkzeuges so zu gestalten und mit den Fließgeschwindigkeiten der beiden Werkstoffe abzustimmen, daß sich die in dem Werkzeug enthaltenene Hohlform mit dem den Sensorring und dem das Tragteil bildenden, polymeren Werkstoff in klar vorherbestimmbarer Weise füllt, ohne daß es der Verwendung von Trennschiebern oder ähnlichem im Bereich der Trennfuge bedarf. In Hinblick auf eine Reduzierung der Werkzeugkosten ist dies von großem Vorteil. Desweiteren tritt eine Verbesserung der Maßhaltigkeit der erhaltenen Teile deutlich in Erscheinung. Das erfindungsgemäße Verfahren eignet sich aus diesem Grunde insbesondere für die Herstellung hochwertiger Sensorringe in der Massenproduktion

## Patentansprüche

1. Verfahren zur Herstellung eines Sensorringes, bei dem ein verformungssteifes Tragteil mit einem Sensorring aus polymerem Werkstoff unlösbar verbunden wird, **dadurch gekennzeichnet, daß** das Tragteil aus einem thermoplastischen Werkstoff und der Sensorring aus elastomerem Werkstoff in nur einem Werkzeug erzeugt werden, mit der Maßgabe, daß der zur Herstellung des Sensorrings verwendete Werkstoff zuvor mit einem Gehalt von gleichmäßig darin verteilten, magnetisierbaren Partikeln vermischt wurde und daß der Sensorring zur Erzeugung elektromagnetischer Signale nach seiner Formgebung und Verfestigung an in Umfangsrichtung einen Abstand voneinander aufweisenden Stellen magnetisiert wird.

2. Verfahren zur Herstellung eines Sensorringes, bei dem ein verformungssteifes Tragteil mit einem Sensorring aus polymerem Werkstoff unlösbar verbunden wird, **dadurch gekennzeichnet, daß** das Tragteil und der Sensorring jeweils aus einem thermoplastischen Werkstoff in nur einem Werkzeug erzeugt werden, mit der Maßgabe, daß der zur Herstellung des Sensorrings verwendete Werkstoff zuvor mit einem Gehalt von gleichmäßig darin verteilten, magnetisierbaren Partikeln vermischt wurde und daß der Sensorring zur Erzeugung elektromagnetischer Signale nach seiner Formgebung und Verfestigung an in Umfangsrichtung einen Abstand voneinander aufweisenden Stellen magnetisiert wird.

3. Verfahren nach einem der Ansprüche 1 oder 2, **dadurch gekennzeichnet, daß** die den Sensroteil und das Tragteil bildenden, polymeren Werkstoffe in schmelzflüssigem oder pastösem Zustand in demselben Werkzeug aufeinandergespritzt und gemeinsam verfestigt werden.

## Claims

1. Method for producing a sensor ring, in which a deformation-resistant carrying part is irreleasably connected to a sensor ring of polymeric material, **characterized in that** the carrying part is created from a thermoplastic material and the sensor ring is created from elastomeric material in only one mould, with the proviso that the material used for producing the sensor ring was previously mixed with a content of magnetizable particles evenly distributed therein and that, after its moulding and solidification, the sensor ring is magnetized at locations spaced apart from one another in the circumferential direction to generate electromagnetic signals.

2. Method for producing a sensor ring, in which a deformation-resistant carrying part is irreleasably connected to a sensor ring of polymeric material, **characterized in that** the carrying part and the sensor ring are respectively created from a thermoplastic material in only one mould, with the proviso that the material used for producing the sensor ring was previously mixed with a content of magnetizable particles evenly distributed therein and that, after its moulding and solidification, the sensor ring is magnetized at locations spaced apart from one another in the circumferential direction to generate electromagnetic signals.

3. Method according to either of Claims 1 and 2, **characterized in that** the polymeric materials forming the sensor part and the carrying part are moulded one on top of the other in a molten or pasty state in the same mould and are solidified together.

## Revendications

1. Procédé pour fabriquer une bague de détection avec lequel une partie porteuse rigide à la déformation est reliée à demeure avec une bague de détection en matériau polymère, **caractérisé en ce que** la partie porteuse est produite dans un matériau thermoplastique et la bague de détection dans un matériau élastomère dans un seul outil avec pour indication que le matériau employé pour la fabrication de la bague de détection a préalablement été mélangé avec une teneur de particules magnétisables distribuées régulièrement dans celle-ci et que la bague de détection, pour générer des signaux électromagnétiques, est magnétisée après son façonnage et sa fixation en des endroits qui présentent un écart entre eux dans le sens du pourtour.

2. Procédé pour fabriquer une bague de détection avec lequel une partie porteuse rigide à la déformation est reliée à demeure avec une bague de détection en matériau polymère, **caractérisé en ce que** la partie porteuse et la bague de détection sont respectivement produites dans un matériau thermoplastique dans un seul outil avec pour indication que le matériau employé pour la fabrication de la bague de détection a préalablement été mélangé avec une teneur de particules magnétisables distribuées régulièrement dans celle-ci et que la bague de détection, pour générer des signaux électromagnétiques, est magnétisée après son façonnage et sa fixation en des endroits qui présentent un écart entre eux dans le sens du pourtour.

3. Procédé selon la revendication 1 ou 2, **caractérisé en ce que** les matériaux polymères qui forment la partie capteur et la partie porteuse sont pulvérisés l'un sur l'autre et fixés en commun dans le même outil dans un état liquide fondu ou pâteux.
